# EUROPÄISCHE PATENTANMELDUNG

(11) **EP 1 800 527 A1**
(43) Veröffentlichungstag der Anmeldung: **27.06.2007**
(21) Anmeldenummer: 06024971.1
(22) Anmeldetag: 02.12.2006
(51) Int. Cl.: A01C 15/02, A01B 69/02

(54) **Vorrichtung zum Ausbringen von Streugut**

(30) Priorität: 21.12.2005 DE 102005061147; 20.05.2006 DE 102006023811
(71) Anmelder: GARDENA Manufacturing GmbH, 89079 Ulm (DE)
(72) Erfinder: Claus, Ralf, 89134 Blaustein (DE)

(57) **Zusammenfassung**

Für eine vorzugsweise manuell verfahrbare Vorrichtung zur bahnenweisen Bestreuung einer Fläche wird vorgeschlagen, wenigstens einen Randbereich einer Streubahn mittels einer ein flüssiges farbiges Markierungsmittel abgebenden Markierungsvorrichtung zu markieren.

## Beschreibung

Die Erfindung betrifft eine Vorrichtung zum Ausbringen von Streugut.

Zum Ausbringen von Streugut im Gartenbereich, insbesondere von vegetationswirksamem Streugut, wie Dünger, Unkraut- oder Schädlingsbekämpfungsmittel sind handgeschobene Streuwagen im Gebrauch, welche typischerweise eine schlitzförmige Öffnung im Bodenbereich aufweisen, durch welche beim Verfahren des Geräts Streugut aus einem Streugutbehälter auf eine befahrene Fläche in vorgebbarer Streudichte gefördert wird. Die Bestreuung der Fläche erfolgt in Form von Streubahnen, deren Bahnbreite in Verfahrrichtung im Regelfall durch den konstruktiven Aufbau des Geräts vorgegeben ist. Für den Eintritt der beabsichtigten Vegetationswirkung des Streuguts ist die Streudichte auf der Fläche von besonderer Bedeutung und eine Überdosierung durch Mehrfachbestreuung kann ebenso wie eine Auslassung einer Fläche zu z. B. einer auffällig unregelmäßigen Rasenfläche oder gar Verödung von Teilflächen führen.

Der vorliegenden Erfindung liegt daher die Aufgabe zugrunde, eine Vorrichtung zum Ausbringen von Streugut anzugeben, welche mit einfachen Mitteln eine gleichmäßige Bestreuung einer Fläche ermöglicht.

Die Erfindung ist im unabhängigen Patentanspruch 1 beschrieben. Die abhängigen Ansprüche enthalten vorteilhafte Ausgestaltungen und Weiterbildungen der Erfindung.

Durch die Markierungsvorrichtung, welche beim Verfahren des Geräts über eine Ausgabeöffnung ein Markierungsmittel aus einem Vorratsbehälter auf die zu bestreuende Fläche abgibt, ist auf einfache und kostengünstige Weise eine Kennzeichnung eines bestreuten Flächenbereichs möglich. Vorzugsweise wird ein Randbereich einer beim Verfahren des Geräts bestreuten Streubahn markiert, wozu die Ausgabeöffnung im Bereich des Randes der Streubahn, d. h. an einem seitlichen Randbereich der bezüglich des Geräts festen seitlichen Position der Streubahn angeordnet ist.

Die seitliche Erstreckung und die Lage des Streubereichs des Geräts sind typischerweise durch den konstruktiven Aufbau des Geräts vorgegeben. In vorteilhafter Ausführung weist das Gerät eine schlitzförmige, quer zur Verfahrrichtung des Geräts verlaufende Streuöffnung auf. Die Abgabe von Streugut durch die Streuöffnung ist vorteilhafterweise an die Fahrbewegung des Geräts gekoppelt und durch den Benutzer, z. B. für Manövrierstrecken oder Fahrstrecken außerhalb der zu bestreuenden Fläche sperrbar bzw. während der Verfahrung über die zu bestreuende Fläche auslösbar.

Die Erfindung ist in ihrem einfachen Aufbau insbesondere von Vorteil für handbetätigte fahrbare Streugeräte. Als zu bestreuende Flächen seien insbesondere Rasenflächen oder ähnliche Vegetationsflächen betrachtet. Das Streugut liegt vorzugsweise in körniger Form vor und das Streugerät ist zur Ausbringung von körnigem Streugut ausgeführt. Das körnige Streugut fällt typischerweise in solchen Situationen bestimmungsgemäß zwischen der Vegetation auf den Boden und ist für den Benutzer dann nicht oder kaum mehr sichtbar.

Das Markierungsmittel ist vorteilhafterweise bezüglich der Vegetation wir- , kungsneutral und enthält z. B. im wesentlichen mineralische inerte und/oder biologisch schnell abbaubare Bestandteile. Das Markierungsmittel kann dadurch unbedenklich in zur guten visuellen Erkennbarkeit ausreichender Konzentration auf die Fläche bzw. die Vegetation abgegeben werden. Das Markierungsmittel ist vorteilhafterweise mit Wasser von der Fläche oder insbesondere von der Vegetation abspülbar, so dass nach der Bestreuung durch natürliche oder künstliche Beregnung das Markierungsmittel unauffällig für den Betrachter entfernt werden kann. Das Markierungsmittel ist in besonders vorteilhafter Ausführung eine Lösung einer farbigen Substanz in Wasser, wobei die farbige Substanz vorzugsweise als aufrührbares Pulver in Wasser enthalten ist. Die Markierungsvorrichtung ist dementsprechend zur Ausgabe eines flüssigen Markierungsmittels ausgebildet. Die Bevorratung kann dadurch auf die farbige Substanz beschränkt werden. Die Zubereitung der wässrigen Lösung, Emulsion oder Aufschwemmung ist für den Benutzer leicht möglich. Es können mit geringem Aufwand farbige Substanzen unterschiedlicher Farben bereitgehalten und nach Bedarf eingesetzt werden. Als mineralisch inerte Substanz in Pulverform kann vorteilhafterweise Titanoxid eingesetzt sein, welches zur Einfärbung mit Farbpigmenten versetzt sein kann.

Die flüssige Ausführung des Markierungsmittels ist auch von besonderem Vorteil dadurch, dass die Flüssigkeit im Gegensatz zu einem feinen trockenen Pulver bei der Fallbewegung von der Ausgabeöffnung auf die Fläche bzw. die Vegetation nur eine geringe Auffälligkeit gegen Verwehen durch Luftbewegungen zeigt und dadurch eine relativ präzise Markierung gewährleistet ist.

Die Markierungsvorrichtung enthält vorteilhafterweise Einrichtungen zur Dosierung der je Fahrstreckeneinheit oder in bevorzugt einfacher Ausführung je Zeiteinheit abgegebenen Menge an Markierungsmittel. Für die Abgabe von in flüssiger Form vorliegendem Markierungsmittel sind solche Dosiereinrichtungen besonders einfach ausführbar und können z. B. in erster vorteilhafter Ausführungsform durch ein Flüssigkeits-Dosierventil zwischen Vorratsbehälter und Ausgabeöffnung oder in anderer vorteilhafter Ausführungsform durch eine verstellbare Belüftungsöffnung zu einem abgeschlossenen Behältervolumen des Vorratsbehälters, durch welche ein bei Abgabe von Markierungsmittel im Vorratsbehälter entstehender Unterdruck ausgeglichen werden kann, gegeben sein. In anderer Ausführung kann die Abgabe von Markierungsmittel auch unter Einwirkung von Überdruck im Vorratsbehälter erfolgen. Die Dosiereinrichtungen können in einfachster Ausführung nur zwischen einem offenen und einem geschlossenen Zustand verstellbar sein. In bevorzugter Ausführung sind mehrere bezüglich der je Fahrstreckeneinheit oder Zeiteinheit abgegebenen Menge an Markierungsmittel unterschiedliche Öffnungseinstellungen oder eine bis zu einer maximalen Öffnungsweite kontinuierlich verstellbare Öffnungsweite gegeben.

Vorteilhafterweise sind beide Randbereiche einer Streubahn markierbar, was vorteilhaft für entgegen gesetzte Fahrrichtungen in benachbarten Streubahnen ist. Hierfür kann in erster vorteilhafter Ausführung vorgesehen sein, dass eine einzige Ausgabeöffnung der Markierungsvorrichtung zwischen zwei seitlich beabstandeten, jeweils einem von zwei Randbereichen der Streubahn zugeordneten Positionen verlagerbar und in der jeweiligen Position vorzugsweise in vorbereiteter Halterung festlegbar ist. Der Vorratsbehälter kann hierbei bei längerer Führungsleitung zwischen Vorratsbehälter und Ausgabeöffnung an fester Stelle am Gerät verbleiben oder vorzugsweise bei kürzerer Verbindungsleitung und nahe bei einem Behälterausgang angeordneter Ausgabeöffnung als mit der Ausgabeöffnung einheitlich handhabbare Baugruppe zwischen zwei seitlich beabstandeten Behälterpositionen versetzbar sein.

In anderer Ausführung können zwei seitlich beabstandete Ausgabeöffnungen über vorzugsweise einzeln mit Dosiereinrichtungen versehene Führungsleitungen für Markierungsmittel mit einem gemeinsamen Vorratsbehälter verbunden oder jeweils einem von zwei Vorratsbehältern direkt zugeordnet sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Seitenansicht eines Streugeräts,
- Fig. 2: eine Heckansicht eines Streugeräts,
- Fig. 3: einen separaten Vorratsbehälter,
- Fig. 4: eine Heckansicht eines Streugeräts mit Behältern nach Fig. 3

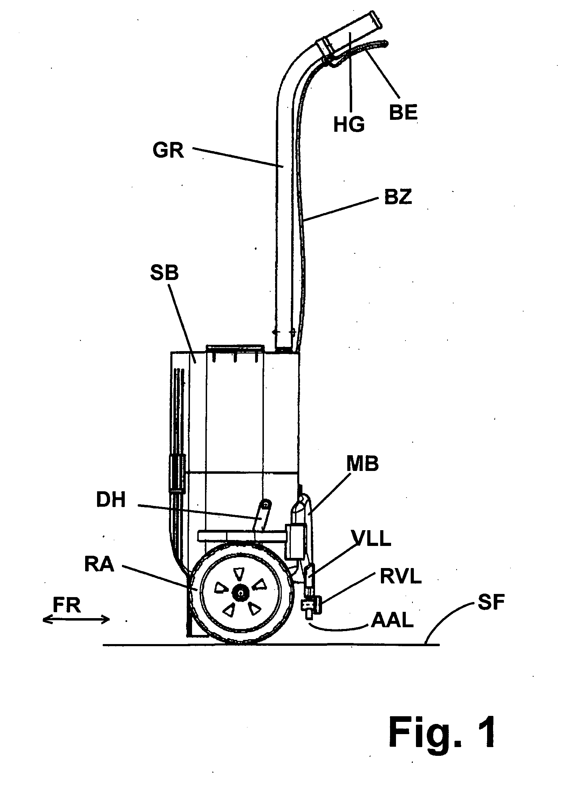

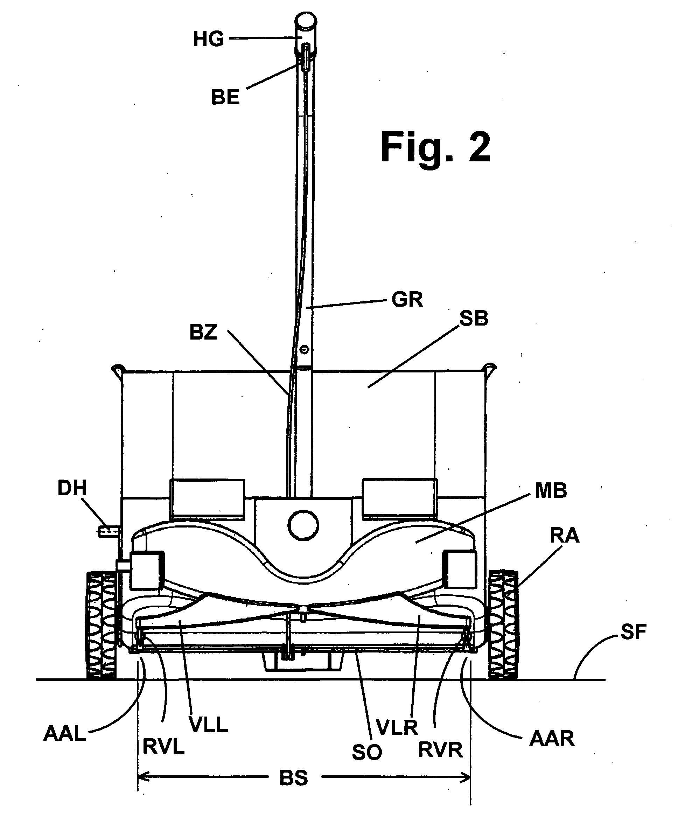

Das in Fig. 1 in Seitenansicht und in Fig. 2 in Heckansicht gezeigte Streugerät ist auf zwei Rädern RA in Fahrtrichtung FR manuell verfahrbar und wird hierfür aus der gezeigten aufrechten Stellung durch den Benutzer in Fig. 1 leicht nach rechts gekippt. Für ergonomische Handhabung ist ein Handgriff HG über ein Gestänge GR, im Beispiel ein einzelner zentraler Holm, in erhöhter Position angebracht.

Die Räder RA sind quer zur Fahrtrichtung beabstandet. Ein Streugutbehälter SB weist an seiner Behälterunterseite eine verschließbare Streuöffnung SO auf, durch welche Streugut, vorzugsweise körniges Streugut, aus dem Behälter nach unten ausfallen kann. Im Streugutbehälter kann oberhalb der Streuöffnung eine Rühreinrichtung und/oder Fördereinrichtung angeordnet sein, welche vorteilhafterweise durch wenigstens eines der Räder RA angetrieben sein kann. Mittels eines Bedienelements BE beim Handgriff HG und über eine Kraftübertragungseinrichtung, wie z. B. einen Bowdenzug BZ, kann die verschließbare Streuöffnung geöffnet bzw. geschlossen werden, wobei vorzugsweise die geschlossene Stellung der Streuöffnung eine Ruhestellung bildet und die Streuöffnung entgegen einer schließend wirkenden Rückstellkraft durch den Benutzer über das Betätigungselement geöffnet werden kann.

Die maximale Öffnungsweite der Streuöffnung kann vorteilhafterweise mittels eines Stellhebels veränderlich einstellbar sein, wobei über eine solche veränderliche Einstellung die Streudichte veränderlich vorgebbar ist.

An dem Streugut ist ein Vorratsbehälter MB für ein Markierungsmittel angeordnet, von welchem seitlich zwei Verbindungsleitungen VLL bzw. VLR zu je einer Ausgabeöffnung AAL bzw. AAR führen. Über die Verbindungsleitungen, welche im skizzierten Beispiel als Kammern mit zur Seite hin abnehmendem Querschnitt ausgeführt sind, aber auch einfache Schlauch- oder Rohrleitungen sein können, kann flüssiges Markierungsmittel vom Vorratsbehälter MB zu den Ausgabeöffnungen geleitet werden. Das flüssige Markierungsmittel fließt vorzugsweise allein unter Schwerkrafteinfluss vom Vorratsbehälter zu den Ausgabeöffnungen.

In Strömungsrichtung des Markierungsmittels zwischen Vorratsbehälter MB und Ausgabeöffnungen AAL, AAR sind, vorzugsweise nahe bei den Ausgabeöffnungen, Regulierventile RVL bzw. RVR als Dosiereinrichtungen vorgesehen. Mittels der Dosiereinrichtungen kann die Ausgabe von Markierungsmittel für jede der beiden Ausgabeöffnungen einzeln gesperrt oder freigegeben werden, wobei vorteilhafterweise die je Zeiteinheit über eine Ausgabeöffnung ausgegebene Menge an Markierungsmittel zwischen einem maximalen Wert und dem gesperrten Zustand kontinuierlich oder stufenweise vorgebbar ist.

Die seitliche Breite BS der Streuöffnung und damit die Streubreite der beim Verfahren bestreuten bahnförmigen Flächen ist unabhängig von der gegebenenfalls möglichen Einstellbarkeit der Streudichte konstant. Die Ausgabeöffnungen AAL, AAR sind in den seitlich gegenüber liegenden Randbereichen der Streubahnen angeordnet, vorteilhafterweise um weniger als 10 %, insbesondere weniger als 5 % der Breite BS der Streuöffnung seitlich gegen die Enden der Streuöffnung versetzt positioniert.

Beim Streubetrieb des Geräts wird typischerweise nur über die einem Rand der bestreuten Fläche oder einer bereits zuvor bestreuten Bahn entfernte der beiden Ausgabeöffnungen Markierungsmittel abgegeben, während die andere Ausgabeöffnung über die zugeordnete Dosiereinrichtung gesperrt ist. Anstelle der Regulierventile können auch nur Absperreinrichtungen oder eine Kombination von Absperreinrichtung und separatem Dosierorgan vorgesehen sein.

Anstelle der beiden aus einem gemeinsamen Vorratsbehälter MB mit Markierungsmittel gespeisten Ausgabeöffnungen kann z. B. auch vorgesehen sein, dass
- bei einem feststehenden Vorratsbehälter nur eine Ausgabeöffnung vorhanden ist, welche alternativ beim rechten oder linken Randbereich der Streubahn anordenbar ist, oder
- eine Baueinheit von Vorratsbehälter und Ausgabeöffnung alternativ rechts oder links auswechselbar angeordnet ist, oder
- auf jeder Seite ein separater Vorratsbehälter mit zugeordneter Ausgabeöffnung angeordnet ist.

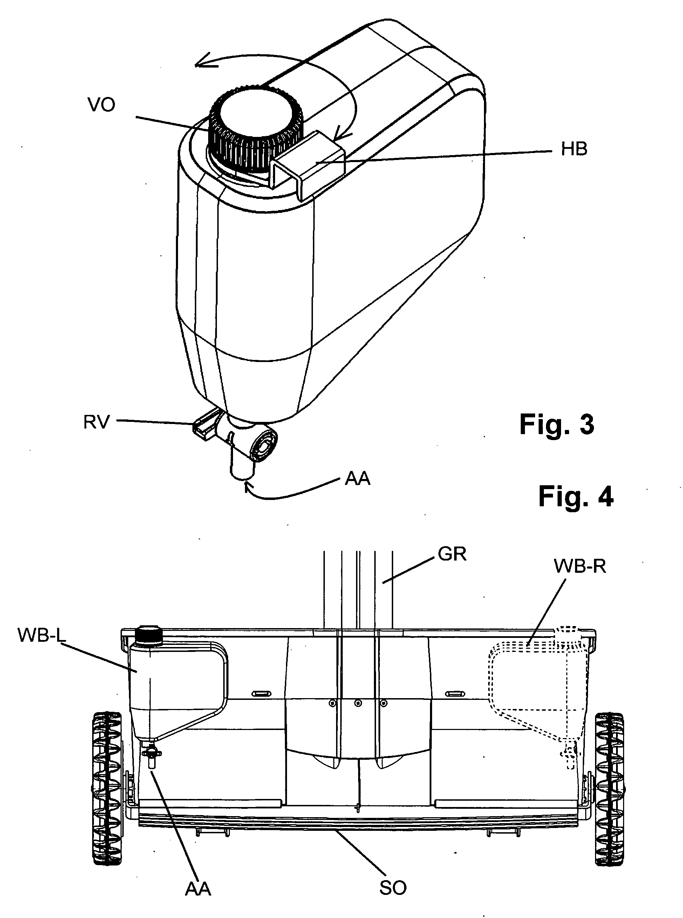

Fig. 3 zeigt einen von dem fahrbaren Gerät lösbaren und insbesondere nach Fig. 4 in zwei unterschiedlichen Positionen an dem Gerät anordenbaren Vorratsbehälter WB. Eine über ein Regulierventil RV mit dem Behälterinnenraum in flüssigkeitsleitender Verbindung stehende Auslassöffnung AA ist fest mit dem Behälter verbunden. Der Behälter ist über eine verschließbare Öffnung VO befüllbar. An dem Behälter sind Haltemittel HB zur lösbaren Befestigung des Behälters an dem fahrbaren Gerät vorgesehen. Diese Haltemittel sind im skizzierten Beispiel vorteilhafterweise in zwei unterschiedliche Stellungen bezüglich des Behälters verlagerbar entsprechend zwei verschiedenen Positionen WBL (in Fig. 4 mit durchgezogener Linie) oder WBR (in Fig. 4 mit unterbrochener Linie). Die Haltemittel wirken mit Haltestrukturen auf Seiten des fahrbaren Geräts zusammen, um den Behälter WB an dem Fahrzeug in einer oder mehreren definierten, gegebenenfalls vom Benutzer wählbaren Positionen für den Markierungsbetrieb zu befestigen. Die in Fig. 4 skizzierten Befestigungspositionen sind vorzugsweise im wesentlichen symmetrisch bezüglich einer vertikalen Mittellängsebene des fahrbaren Geräts. Die Haltemittel sind in dem Beispiel nach Fig. 3 hakenförmig ausgebildet und ermöglichen das Einhängen des Vorratsbehälters WB in eine entsprechende Gegenstruktur des fahrbaren Geräts. An dem Vorratsbehälter und/oder Gerät können weitere Haltestrukturen bzw. Gegenstrukturen vorgesehen sein.

Die Ausrichtung und Lage der Auslauföffnung AA in den beiden in Fig. 4 skizzierten Positionen des Behälters an dem fahrbaren Gerät entsprechen Ausrichtung und Lage der Auslauföffnungen AAR, AAL in Fig. 2 und die Erläuterungen zu Fig. 2 gelten analog für die Anordnung nach Fig. 4.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Vorrichtung zum Ausbringen von Streugut auf eine Fläche in Form von Streubahnen mittels eines fahrbaren Geräts mit vorgegebener Lage der Streubahn relativ zum Gerät, **dadurch gekennzeichnet, dass** mit dem Gerät eine Markierungsvorrichtung verbunden ist, welche aus einem Vorratsbehälter ein Markierungsmittel über eine Ausgabeöffnung beim Verfahren des Geräts linienförmig entlang der Streubahn auf die Fläche ausgibt.

2. Vorrichtung nach Anspruch 1, **dadurch gekennzeichnet, dass** das Markierungsmittel in flüssiger Form im Vorratsbehälter vorliegt.

3. Vorrichtung nach Anspruch 1 oder 2, **dadurch gekennzeichnet, dass** das Markierungsmittel unter Schwerkraftwirkung vom Vorratsbehälter zu der Ausgabeöffnung geführt ist.

4. Vorrichtung nach einem der Ansprüche 1 bis 3, **dadurch gekennzeichnet, dass** die pro Wegstreckeneinheit und/oder pro Zeiteinheit ausgegebene Menge an Markierungsmittel durch Reguliereinrichtungen veränderlich einstellbar ist.

5. Vorrichtung nach Anspruch 4, **dadurch gekennzeichnet, dass** die Reguliereinrichtungen bezüglich des Wegs ausgegebenen Markierungsmittels stromabwärts des Vorratsbehälters angeordnet sind.

6. Vorrichtung nach Anspruch 4, **dadurch gekennzeichnet, dass** die Reguliereinrichtungen Belüftungseinrichtungen für einen Vorratsbehälter für flüssiges Markierungsmittel enthalten.

7. Vorrichtung nach einem der Ansprüche 1 bis 6, **dadurch gekennzeichnet, dass** die Ausgabeöffnung für das Markierungsmittel im Bereich eines Randes der Streubahn am Gerät angeordnet ist.

8. Vorrichtung nach Anspruch 7, **dadurch gekennzeichnet, dass** die Ausgabeöffnung alternativ an zwei seitlich beabstandet gegenüber liegenden Randbereichen der Streubahn am Gerät anordenbar ist.

9. Vorrichtung nach Anspruch 8, **dadurch gekennzeichnet, dass** ein Vorratsbehälter in wenigstens zwei bezüglich einer vertikalen Mittellängsachse des fahrbaren Geräts im wesentlichen symmetrischen Positionen an dem Gerät lösbar befestigbar ist.

10. Vorrichtung nach Anspruch 7, **dadurch gekennzeichnet, dass** zwei Ausgabeöffnungen in seitlich beabstandet gegenüber liegenden Randbereichen der Streubahn angeordnet sind.

11. Vorrichtung nach Anspruch 10, **dadurch gekennzeichnet, dass** die beiden Ausgabeöffnungen mit einem gemeinsamen Vorratsbehälter verbunden sind.
